Europäisches Patentamt

European Patent Office

Office européen des brevets

(19)

(11) Numéro de publication: **0 038 592**
**A1**

## (12) DEMANDE DE BREVET EUROPEEN

(21) Numéro de dépôt: **81200389.5**

(22) Date de dépôt: **06.04.81**

(51) Int. Cl.³: **G 08 B 26/00**
**H 04 Q 9/14**

(30) Priorité: **18.04.80 LU 82373**

(43) Date de publication de la demande:
**28.10.81 Bulletin 81/43**

(84) Etats contractants désignés:
**AT CH DE FR GB IT LI NL SE**

(71) Demandeur: **BEMAC Sprl Société dite**
**rue de Hollogne 41**
**B-4341 Awans(BE)**

(72) Inventeur: **Bertoni, Claudio**
**20 rue des Pervenches**
**B-4100 Seraing(BE)**

(72) Inventeur: **Belletti, Armand Walter**
**41 rue de Hollogne**
**B-4341 Awans(BE)**

(74) Mandataire: **Dellicour, Paul**
**Office de Brevets E. Dellicour rue Fabry 18/012**
**B-4000 Liege(BE)**

(54) Centrale de collecte d'informations et en particulier centrale de détection incendie.

(57) La centrale consiste en un ensemble de collecteurs (C1, C2, C3, ...), placés chacun à un endroit où la collecte d'informations est nécessaire et reliés entre eux à partir du point de traitement ou centralisateur, pour assurer le transfert des informations (I) recueillies par chaque collecteur, par deux lignes de communication, une (A) de transmission à partir du centralisateur et une (B) de réception vers le centralisateur (T).

Le centralisateur (T) envoie un train d'impulsions logique, comportant "x" impulsions par collecteur, et chaque collecteur répond aux "x" premières impulsions qu'il reçoit en les bloquant par rapport aux collecteurs suivants, vers lesquels il laisse passer les autres impulsions.

FIG.1

- 1 -

<u>Centrale de collecte d'informations et en particulier cen-
trale de détection incendie.</u>

La présente invention concerne la collecte d'informations
et en particulier la détection incendie et a pour objet de
collecter des informations dispersées et de les envoyer
séparément, c'est-à-dire en gardant l'identité de l'information, vers un endroit unique ou centrale où est effectué
le traitement.

Pour une collecte d'informations il est possible évidemment
de réunir tous les points de collecte directement à l'endroit
de traitement.

Dans le même but des dispositifs sont connus, notamment les
multiplexages, qui permettent de transmettre simultanément
un grand nombre d'informations en identifiant les points de
collecte. Ces dispositifs, comme la réunion de tous les
points de collecte en un endroit de traitements, sont relativement compliqués et coûteux.

Le but de la présente invention est la réalisation de cette
fonction de manière simple par un dispositif approprié, caractérisé en ce qu'il consiste en un ensemble de collecteurs,
placés chacun à un endroit où la collecte d'informations est
nécessaire et reliés entre eux à partir du point de traitement ou centralisateur, pour assurer le transfert des informations recueillies par chaque collecteur, par deux lignes de communication, une de transmission à partir du centralisateur et une de réception vers le centralisateur.

Pour mieux faire comprendre l'invention celle-ci est décrite ci-après plus en détail sur la base du dessin annexé, montrant en :

Figure 1 le schéma général du dispositif de collecte d'informations suivant l'invention ;

Figure 2 les façons dont chaque collecteur peut répondre aux impulsions reçues ;

Figure 3, d'une part, un train d'impulsions envoyé par le centralisateur vers les collecteurs, et, d'autre part, le signal de la ligne de retour.

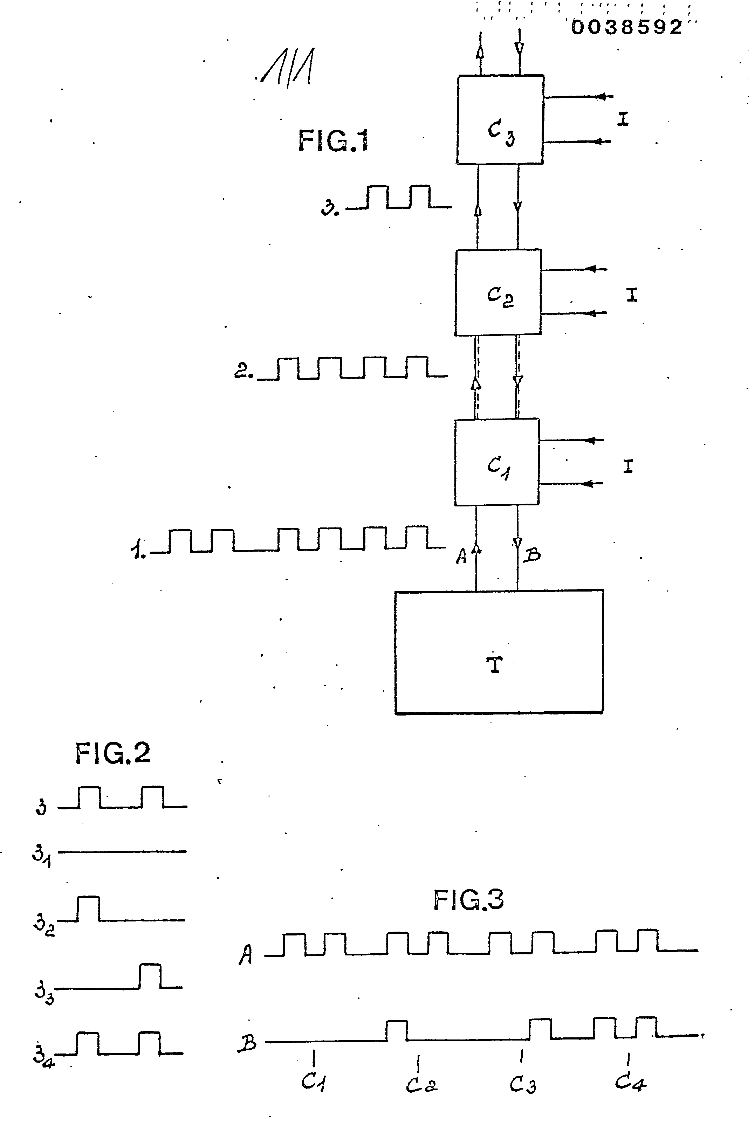

Dans le dispositif représenté en Figure 1 un collecteur C est placé à chaque endroit où la collecte d'informations est nécessaire. Ces collecteurs C1, C2, C3, ... assurent le transfert des informations I recueillies par chaque collecteur vers l'endroit de traitement ou centralisateur T par une liaison constituée uniquement de deux lignes de communication pour l'ensemble des collecteurs. Ces deux lignes de communication, une ligne A de transmission à partir du centralisateur et une ligne B de réception vers ledit centralisateur, relient entre eux tous les collecteurs C à partir du centralisateur T.

Le centralisateur T envoie un train d'impulsions logique, "x" impulsions par collecteur, et analyse simultanément l'état du signal sur la ligne de retour.

Chaque collecteur répond aux "x" premières impulsions qu'il reçoit en les bloquant vers les collecteurs suivants, et laisse passer vers les collecteurs suivants les autres impulsions.

On a supposé dans le dispositif de figure 1 le cas de deux impulsions envoyées par le collecteur et on a représenté les impulsions à l'entrée de chaque collecteur (1, C1 ; 2, C2 ; 3, C3). Le nombre d'informations maximum que le collecteur peut recevoir est égal à "x", chaque information pouvant prendre 2 états. Ainsi, dans l'exemple de figure 1 chaque collecteur peut répondre de quatre façons possibles (Figure 2 : $3_1$ - $3_2$ - $3_3$ - $3_4$) aux deux impulsions qu'il reçoit.

La réponse est envoyée sur la ligne de retour. L'analyse des impulsions de réponse de chaque collecteur est simultanée aux impulsions correspondantes envoyées par le centralisateur T. Ce centralisateur identifie à la fois le collecteur C et l'information I.

Un train d'impulsions envoyé par le centralisateur T vers quatre collecteurs C, par exemple, pouvant recevoir chacun deux informations a été représenté en A (figure 3), tandis que le signal de la ligne de retour a été désigné par B. Dans cet exemple, la réponse envoyée sur la ligne de retour est différente pour chaque collecteur.

Bien entendu, on peut sans sortir du domaine de l'invention utiliser pour réaliser les deux communications divers dispositifs matériels. Cette remarque s'applique également à la forme des impulsions, à leur polarité et à leur amplitude.

Revendications

1. Centrale de collecte d'informations, en particulier centrale de détection incendie, caractérisée en ce qu'elle consiste en un ensemble de collecteurs (C1, C2, C3, ...), placés chacun à un endroit où la collecte d'informations est nécessaire et reliés entre eux à partir du point de traitement ou centralisateur (T), pour assurer le transfert des informations (I) recueillies par chaque collecteur, par deux lignes de communication, une (A) de transmission à partir du centralisateur (T) et une (B) de réception vers le centralisateur (T).

2. Centrale suivant la revendication 1, caractérisée en ce que le centralisateur (T) envoie un train d'impulsions logique, comportant x impulsions par collecteur, et en ce que chaque collecteur répond aux x premières impulsions qu'il reçoit en les bloquant par rapport aux collecteurs suivants, vers lesquels il laisse passer les autres impulsions.

3. Centrale suivant la revendication 2, caractérisé en ce que l'analyse des impulsions de réponse de chaque collecteur est simultanée aux impulsions correspondantes envoyées par le centralisateur, de telle manière que le centralisateur identifie à la fois le collecteur et l'information.

FIG.1

FIG.2

FIG.3

0038592

Numéro de la demande

Office européen
des brevets

**RAPPORT DE RECHERCHE EUROPEENNE**

EP 81 20 0389

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | US - A - 3 706 853 (SAITO et al.)<br><br>* Colonne 1, ligne 22 à ligne 54; revendications *<br><br>--- | 1-3 | G 08 B 26/00<br>H 04 Q 9/14 |
| | US - A - 3 652 993 (BRIDWELL et al.)<br><br>* Colonne 2, ligne 6 à colonne 3, ligne 3; figures 1 et 2 *<br><br>--- | 1-3 | |
| | FR - A - 2 265 132 (TAKACHIHO KOEKI KK)<br><br>* Revendications *<br><br>--- | 1-3 | **DOMAINES TECHNIQUES RECHERCHES (Int. Cl.³)** |
| A | LU - A - 68 216 (SOCIETE INDUSTRIELLE DE LIAISONS ELECTRIQUES)<br><br>* Revendications *<br><br>--- | | G 08 B 26/00<br>H 04 L 11/16<br>H 04 Q 9/14<br>G 08 B 25/00<br>G 08 B 17/00 |
| A | FR - A - 1 389 164 (MORLEY et GARRETT)<br><br>* Page 1, colonne de gauche, ligne 1 à colonne de droite, dernier alinéa; résumé *<br><br>-------- | | |
| | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

| | Le présent rapport de recherche a été établi pour toutes les revendications | |
|---|---|---|
| Lieu de la recherche<br>La Haye | Date d'achèvement de la recherche<br>30.07.1981 | Examinateur<br>REEKMANS |

OEB Form 1503.1   06.78